# EUROPEAN PATENT SPECIFICATION

(11) **EP 1 000 115 B1**
(45) Date of publication and mention of the grant of the patent: **14.11.2001**
(21) Application number: 98937116.6
(22) Date of filing: 24.07.1998
(51) Int. Cl.: C08J 9/16, B29C 44/34

(54) **EXPANDABLE THERMOPLASTIC PARTICLES AND ATOMIZATION METHOD FOR MAKING SAME**
EXPANDIERBARE THERMOPLASTISCHE PARTIKEL UND ZERSTÄUBUNGSVERFAHREN ZUR HERSTELLUNG
PARTICULE THERMOPLASTIQUES EXTENSIBLES ET PROCEDE D'ATOMISATION PERMETTANT LEUR FABRICATION

(30) Priority: 01.08.1997 US 54472 P; 12.08.1997 US 55333 P; 20.08.1997 US 56496 P
(43) Date of publication of application: 17.05.2000
(73) Proprietor: Huntsman Corporation, Salt Lake City, Utah 84108 (US)
(72) Inventor: CRAIG, Thomas, Orr, Hyde SK14 6JJ (GB)
(74) Representative: Winkler, Andreas, Dr.
(86) International application number: US9815446
(87) International publication number: WO9906477

(56) References cited:
- EP-A- 0 564 781
- EP-A- 0 638 403

## Description

This application claims the benefit of U.S. Provisional Application No. 60/056,496 filed August 20, 1997 and U.S. Provisional Application No. 60/055,333 which was filed August 12, 1997 and U.S. Provisional Application No. 60/054,472 which was filed on August 1, 1997, all of which are currentLy still pending. The entire contents of these patent applications are herein incorporated by reference.

This invention relates to polymer particles which are produced utilizing an atomization technique. More particularly, the invention concerns a novel and improved method for producing expandable thermoplastic particles (and particularly expandable polystyrene.) Expansion and fusion of the particles may be advantageously conducted in order to form various molded products from the particles.

### BACKGROUND

The prior art provides methods for manufacturing expandable polystyrene materials which include a commonly-used batch process wherein raw materials including an aqueous suspension containing styrene monomer, a surfactant, catalyst, and other additives are processed by means known to those skilled in the art under conditions of vigorous agitation to yield spherical polystyrene beads having diameters in the range of about 0.3 to 1.5 millimeters. Such beads are subsequently impregnated typically with a hydrocarbon blowing agent, such as pentane, by charging approximately one hundred parts (by weight) of polymer beads, one hundred parts water, and one part of a concentrated surfactant (or a mixture thereor, such as a mixture of an arylalkyl polyether alcohol and dodecyl benzene sulfonate) into an autoclave along with about three to ten parts of pentane. The mixture is heated to about 76,7°C (170 degrees fahrenheit) under pressure for 3 hours and cooled to room temperature to yield expandable polystyrene beads which are subsequently ready for use after being rinsed and dried. Generally, in such a batch system, the size of the beads can be controlled by advantageously selecting processing conditions, including: time, agitation, temperature, pressure, and reactant concentration. However, this process for producing expandable polystyrene beads is not without several inherent disadvantages.

One of the disadvantages associated with the common batch practice is that large volumes of water are required to suspend the polystyrene beads during both the polymerization and the impregnation steps. This in reality is a two-fold disadvantage. First of all, the heat energy input to the water to bring it to the required temperature is forfeit at the end of the impregnation when the water is discharged to the environment. Secondly, prior to such discharge the water must be treated, at additional expense, in order to meet the strict regulatory requirements imposed by various governmental entities. These combined energy and treatment costs are a significant portion of the cost of expandable polystyrene which must be passed on to the end-users of the polystyrene.

Another disadvantage is that the stirred tank reactors in which the suspension is reacted are vulnerable to a multiplicity of events which can cause the reactor agitator to cease in its motion, including power and equipment failures. Such failures represent potential catastrophic occurrences in that coalescence of monomer droplets may lead to formation of a single, large, reactive mass of material undergoing an uncontrollable, strongly exothermic reaction owing to there being no effective means for heat removal in such circumstances. In addition to fouling of equipment, such a scenario represents a significant safety hazard.

US patent numbers 4,174,427; 5,000,891; 5,240,657; 5,525,637; and 5,573,790, the contents of which are herein incorporated by reference, are all concerned with production of expandable polystyrene.

Expandable thermoplastic polymeric materials, such as expandable polystyrene prepared in accordance with the foregoing, containing volatile agents are known to be expandable by application of heat under conditions which permit the volatile agent to be vaporized and form large numbers of cells within the bulk of the polymeric material. When such heating is performed within the confines of a suitable mold, various articles of manufacture may be produced using the expandable polystyrene beads mentioned. It is towards alternative means for preparing expandable polystyrene beads, in avoidance of the disadvantages associated with the prior art process described above, which the instant invention is concerned. The instant invention also relates to a means for producing expandable polystyrene particles of reasonable uniformity in size, to preclude or reduce the necessity for multi-step particle size classification of the spheroids produced. The spheroids produced in the present invention may contain various additives which include but are not limited to flame retardants, nucleating agents, and other chemical species which are known to impart desirable properties to polymers. Such other chemical species are well-known to those of ordinary skill in the art.

### SUMMARY OF THE INVENTION

The present invention provides a continuous process for producing expandable polystyrene spheroids and is free from the hazards associated with potential formation of a large mass of exothermally reactive material, as well as the pendant costs for treatment of large volumes of water in pursuance of satisfaction of environmental or other regulatory standards. The process comprises providing a molten mixture which includes a thermoplastic polymer and at least one blowing agent, and delivering this molten mixture to an atomizing nozzle under conditions sufficient to cause atomization of said molten mixture so as to form droplets comprising the molten mixture, and effecting sufficient cooling of the droplets to form polymer particles having the blowing agent entrapped therein. The particles are then collected for later use.

The thermoplastic polymer comprises at least one polymer selected from the group consisting of: polystyrene, polyethylene, and polypropylene.

In one preferred embodiment expandable polystyrene spheroids made in accordance with the principles of the present invention are produced by providing a molten polymer mass containing at least one blowing agent in an evenly distributed form, under conditions of temperature and pressure sufficient to ensure that a gas phase does not exist in the molten mass. The temperature of the molten mixture is between 40°C and 300°C. The blowing agent is selected from the group consisting of: noble gases, nitrogen, oxygen, air, and carbon dioxide. Also provided is an atomization nozzle in fluid contact with the stream or reservoir of the molten mass, which reservoir serves as a feed source for the nozzle. The molten material from the polymer stream or reservoir is transferred through an orifice in the nozzle to a region of pressure less than that present in the reservoir or stream. The change in pressure encountered, coupled with the physical configuration of the nozzle and the action of the atomizing gas results in atomization of the molten polymer containing the blowing agent evenly distributed throughout its bulk. The atomizing gas can include a reactive species which is capable of functionalizing the polymer. The reactive species can be selected from the group consisting of: halogens, hydrogen halides, interhalogen compounds, nitrogen oxides, ozone, maleic acid anhydride, amines, oxygen, sulfur trioxide, and air. The Joule/Thompson cooling attendant to the expansion of the atomizing gas accompanying the atomization, along with any external cooling optionally applied causes the molten polymer to form spheroids containing the blowing agent evenly dispersed therein. Following collection, the spheroids are suitable for use in molding various articles of manufacture using techniques known to those of ordinary skill in the art.

### BRIEF DESCRIPTION OF DRAWINGS

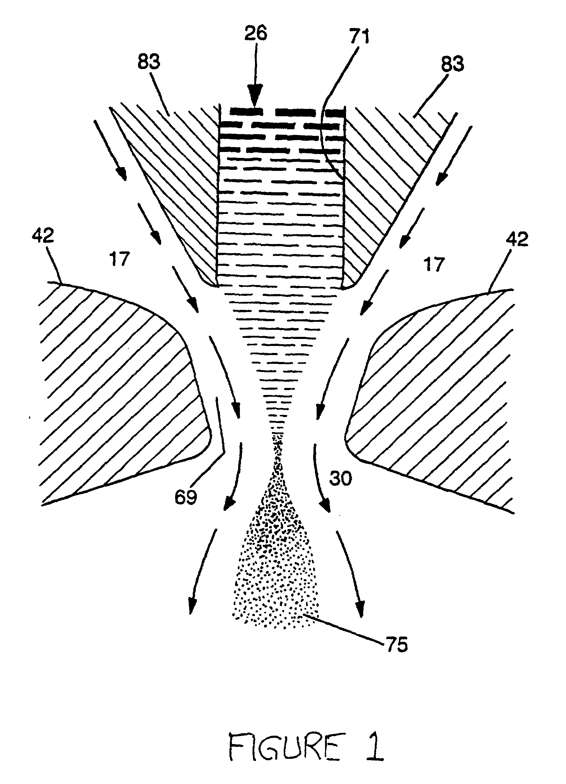

FIG.1 is a cutaway view of an atomizing nozzle useful for producing expandable polymer particles according to the invention.

### DETAILED DESCRIPTION OF PREFERRED EMBODIMENTS

The present invention is a process for producing expandable polystyrene particles from a polymer melt mixture which includes at least one blowing agent. An atomization process is employed to form spheroids from the melt, the spheroids later being used in a molding process well-known to those of ordinary skill in this art. Preferably, the polymeric spheroid particles comprise polystyrene.

A requisite for producing expandable polymers according to this invention is that a stream of molten polymer must be provided to an atomizing nozzle. The molten polymer contains what is commonly referred to by those in the art as a "blowing agent". Blowing agents are generally well-known to those of ordinary skill in the polymer art. A blowing agent employed herein may include any of those well-known in the foamed polymer art as being useful for this purpose including, but not limited to gases including: hydrocarbons, nitrogen, carbon dioxide, halogenated hydrocarbons, fluorinated hydrocarbons, - chlorocarbons, chlorofluorocarbons. Solid substances such as azo-dicarbonamide and other well-known compounds which similarly evolve gases suitable for use as blowing agents in polymers when subjected to thermal energy are also herein indicated as being suitable blowing agents for inclusion in the polymer melt. Preferably, though, for purposes of the instant invention, the blowing agent comprises n-pentane, butane, or isobutane and most preferably the blowing agent comprises n-pentane. Preferably, the amount of blowing agent present in the melt is between 0.5 and 7.0 percent by weight, and when n-pentane is selected as the blowing agent it is present at an amount of between 1.0 % and 10 % and most preferably 5.0 % by weight. The molten polymer stream is maintained under conditions of temperature and pressure such that no gaseous pentane is present, and the blowing agent is evenly distributed within the polymer stream melt. Any of various means for agitation, as are well-known to those of ordinary skill, may be employed to promote uniformity of the dispersion of blowing agent in the melt.

The atomizing nozzle to which the polymer stream laden with blowing agent is fed may be of various configurations provided that the polymer stream is sufficiently atomized that particles in the size range of 0.3 to 1.5 millimeters are formed upon the cooling of the atomized polymer.

The most preferred nozzles for use in atomizing polymer melts according to this invention are those which employ impingement of a gas stream on a stream or film of molten polymer in order to atomize the stream. Examples of such gas atomization nozzles are disclosed in US Patents 4,619,845 and 5,228,620, the entire contents of which are herein incorporated by reference. Referring to the drawing of FIG. 1 there is shown a cutaway view of a schematic of an atomizing nozzle useful for preparing particles of expandable polymers according to the present invention. In this figure, **75** represents the polymer particle product. **83** represents a co-extensive construction in which is contained a tubular conduit **71** through which the molten polymer stream **26** is conveyed to atomizing zone **69. 42** is a construction which defines the orifice through which the atomizing gas and molten polymer stream pass. On passing through the orifice the molten polymer stream is caused to be atomised by virtue of the interaction of the high velocity atomizing gas **17** interacting with the molten polymer stream. The atomizing gas **17** is fed in under high pressure at a sub-sonic rate into the atomizing nozzle where it acts upon the molten polymer stream thus causing the latter to be atomised. The portion **30** from which the atomized particles emerge is a region of lower pressure, preferably atmospheric. Accompanying the drop in pressure experienced by atomizing gas **17** is adiabatic cooling of both the atomizing gas and the polymer particles. Since molten polymer stream **26** contains a blowing agent, such cooling of the particles ensures that the blowing agent is encapsulated within the product particles **75** themselves.

Principles of atomization are detailed in the book entitled "Fluid Flow Phenomena in Metals Processing" by J. Szekely, published by Academic Press, New York City, New York (1979), pp 340 et seq., the contents of which are herein incorporated by reference. Other suitable atomization apparatus for the process according to the invention may include, for example, rotary atomization discs or plates, single material and multimaterial nozzles with or without auxiliary supply of energy (e.g., mechanical vibration) and mixing nozzles with internal or external mixing. Another nozzle anticipated as being useful herein is the one set forth and described in an article appearing in "Materials World" magazine, Vol. 5, No. 7 (July 1997), pages 383 et seq. (the entire contents of which are herein incorporated by reference).

Another requisite for making polymer particles in accordance with this invention is the supplying of a stream of molten polymer liquid into the atomization apparatus described above . This may may be accomplished by free inflow from a pressurized container or by means of suitable pumps, extruders, or other melt-conveying devices known in the art. The combination of temperature and pressure required to deliver the polymer melt to the atomizing nozzle at a desired flow rate can readily be calculated from the termperature-viscosity dependence data for the polymer or polymer blend employed. Preferably, the pressure inside the conduits is greater than atmospheric pressure and is most preferably 13,8 bar gauge pressure (200 psig). Preferably, the temperature of the polymer melt is at least ten (10) degrees centigrade above the melting point or glass transition point of the polymer. When the polymer used is polystyrene, the preferable temperature of the melt is 180 degrees centigrade using 5.0 % pentane in the melt.

Once the liquid stream comprising the polymer melt is supplied to the atomizing nozzle, atomization occurs by virtue of the interaction of the atomizing gas with the polymer melt and the simultaneous change in pressure it experiences. Preferably, the pressure outside the nozzle is atmospheric pressure, pressures other than atmospheric may be used provided that the difference between that experienced by the polymer melt and the external pressure is at least 0.34 bar gauge pressure (5 psig). The diameter of the particles produced is preferably between 0.3 to 1.5 millimeters. The preferred size of the particles varies according to the final application in which their employ is desired, with 1.0 mm diameter being typical.

Additionally, sufficient cooling for rendering the nascent polymer particles exiting the atomization nozzle is employed in order to suppress gas generation from the blowing agent during the stage in which the polymer spheroids are formed, in order that no appreciable net expansion of the particles occurs, and to promote retention of the blowing agent within the solidified particles themselves.

### EXAMPLE I

A continuous mass polymerization plant producing molten crystal polystyrene at. 8000 kg/hr is arranged so that a sidestream of molten polymer can be taken from the plant output stream at a rate of 50 kg/hr using a gear pump. The gear pump delivers the polymer to a static mixer equipped with an injector device through which a volatile substance such as pentane can be admitted to the molten polymer and dissolved therein. The polymer exiting the static mixer is maintained at a temperature of 210 degrees centigrade by heat transfer oil circulating in a jacket surrounding the static mixer. The polymer passes from the static mixer into the throat of a cooling extruder which cools the molten polymer to 170 degrees centigrade. The polymer exiting the extruder passes to an atomizing diehead comprising a heated vertical pour tube having an internal diameter of 10 mm. The molten polymer emerges as a free-falling strand from the lower end of the pour tube and is impinged upon and atomized by a stream of nitrogen gas. The atomizing stream of nitrogen gas is delivered at a pressure of 17 bar through an array of orifices arranged in a circle whose center is the center of the pour tube. The stream of nitrogen from each orifice impinges on the polymer at an angle of 15 degrees with respect to the axis of the polymer stream. Within each nitrogen delivery device is a resonant cavity which creates a 50 kHz pressure and velocity oscillation in the nitrogen gas stream. The flow rate of nitrogen is set at 5 cubic meters per hour calculated at standard temperature and pressure. The atomized polymer is in the form of spherical particles having a mean diameter of 1 mm. Pentane is then injected into the molten polymer stream in the static mixer to give 5% (by wt.) pentane based on polymer. The pentane-laden molten polystyrene is atomized by the impinging gas into spherical particles having approximately 0.8 mm diameter. Samples of these particles were heated in boiling water and thereby expanded to give low density foamed polystyrene particles having a closed-cell structure, thus demonstrating that the pentane was retained within the nascent polymer particles created by the atomization. Larger quantities of the particles were pre-expanded by exposure to steam in a pre-expander of the type conventionally used in the manufacture of expandable polystyrene from suspension-polymerized gas-impregnated polymer beads. The expanded beads were left to mature for 5 hours, and then molded to produce insulation boards having a density of 40 kg/Cu meter and a thermal conductivity of 0.03 watts per meter per degree centigrade.

## Claims

1. A process for producing expandable thermoplastic particles which comprises:
a) providing a molten mixture which includes a thermoplastic polymer and a blowing agent;
b) forming particles from the thermoplastic polymer by providing a stream of an atomizing gas impingent on said molten mixture;
c) cooling the expandable particles to below their melting point; and collecting the particles.

2. The process according to claim 1 wherein said thermoplastic polymer comprises at least one polymer selected from the group consisting of: polystyrene, polyethylene, and polypropylene.

3. The process according to claim 1 wherein said blowing agent is selected from the group consisting off hydrocarbons, chlorohydrocarbons, chlorofluorohydrocarbons, carbon dioxide, nitrogen, and air.

4. The process according to claim 3 wherein said blowing agent is azodicarbonamide.

5. The process according to claim 3 wherein said blowing agent is selected from the group consisting of: pentane and isobutane.

6. The process according to claim 1 wherein said cooling is effected by virtue of expansion of the atomizing gas.

7. The process according to claim 6 wherein said expansion is essentially adiabatic.

8. The process according to claim 1 wherein the diameter of the particles collected is between 0.3 and 1.5 mm.

9. The process according to claim 1 wherein the temperature of said molten mixture is between 40 degrees centigrade and 300 degrees centigrade.

10. The process according to claim 1 wherein the molten mixture is subjected to a pressure that is greater than atmospheric pressure.

11. The process according to claim 1 wherein the concentration of said blowing agent in said polymer melt is between 0.5 % and 7.0 % by weight of the total polymer melt weight.

12. The process according to claim 1 wherein said blowing agent is selected from the group consisting of: noble gases, nitrogen, oxygen, air, and carbon dioxide.

13. The process according to claim 1 wherein said atomizing gas includes a reactive species which is capable of functionalizing the polymer.

14. The process according to claim 13 wherein said reactive species is selected from the group consisting of: halogens, hydrogen halides, interhalogen compounds, nitrogen oxides, ozone, maleic acid anhydride, amines, oxygen, sulfur trioxide, and air.

15. The process according to claim 1 wherein the difference in pressure experienced by the polymer melt and the pressure outside of said atomizing nozzle is greater than 0.34 bar gauge pressure (5 psig.).

16. An expandable polymer product produced by any of processes 1 - 15.

## Patentansprüche

1. Verfahren zur Herstellung expandierbarer thermoplastischer Partikel, welches umfaßt:
a) Bereitstellen einer geschmolzenen Mischung, die ein thermoplastisches Polymer und ein Treibmittel einschließt;
b) Ausbilden von Partikeln aus dem thermoplastischen Polymer durch Bereitstellen eines Stromes aus einem Zerstäubungsgas, der auf besagte geschmolzene Mischung auftrifft;
c) Abkühlen der expandierbaren Partikel auf unterhalb ihres Schmelzpunktes; und Sammeln der Partikel.

2. Verfahren nach Anspruch 1, **dadurch gekennzeichnet, daß** besagtes thermoplastisches Polymer wenigstens ein Polymer umfaßt, das ausgewählt ist aus der Gruppe, die aus Polystyrol, Polyethylen und Polypropylen besteht.

3. Verfahren nach Anspruch 1, **dadurch gekennzeichnet, daß** besagtes Treibmittel ausgewählt ist aus der Gruppe, die aus Kohlenwasserstoffen, Chlorkohlenwasserstoffen, Chlorfluorkohlenwasserstoffen, Kohlendioxid, Stickstoff und Luft besteht.

4. Verfahren nach Anspruch 3, **dadurch gekennzeichnet, daß** besagtes Treibmittel Azodicarbonamid ist.

5. Verfahren nach Anspruch 3, **dadurch gekennzeichnet, daß** besagtes Treibmittel ausgewählt ist aus der Gruppe, die aus Pentan und Isobutan besteht.

6. Verfahren nach Anspruch 1, **dadurch gekennzeichnet, daß** besagte Abkühlung durch die Expansion des Zerstäubungsgases bewirkt wird.

7. Verfahren nach Anspruch 6, **dadurch gekennzeichnet, daß** besagte Expansion im wesentlichen adiabatisch ist.

8. Verfahren nach Anspruch 1, **dadurch gekennzeichnet, daß** der Durchmesser der gesammelten Teilchen zwischen 0,3 und 1,5 mm liegt.

9. Verfahren nach Anspruch 1, **dadurch gekennzeichnet, daß** die Temperatur besagter geschmolzenen Mischung zwischen 40°C und 300°C liegt.

10. Verfahren nach Anspruch 1, **dadurch gekennzeichnet, daß** die geschmolzene Mischung einem Druck unterworfen wird, der größer als atmosphärischer Druck ist.

11. Verfahren nach Anspruch 1, **dadurch gekennzeichnet, daß** die Konzentration besagten Treibmittels in besagter Polymerschmelze zwischen 0,5 und 7,0 Gew.-% des Polymerschmelze-Gesamtgewichtes liegt.

12. Verfahren nach Anspruch 1, **dadurch gekennzeichnet, daß** besagtes Treibmittel ausgewählt ist aus der Gruppe, die aus Edelgasen, Stickstoff, Sauerstoff, Luft und Kohlendioxid besteht.

13. Verfahren nach Anspruch 1, **dadurch gekennzeichnet, daß** besagtes Zerstäubungsgas eine reaktive Spezies einschließt, die in der Lage ist, das Polymer zu funktionalisieren.

14. Verfahren nach Anspruch 13, **dadurch gekennzeichnet, daß** besagte reaktive Spezies ausgewählt ist aus der Gruppe, die aus Halogenen, Halogenwasserstoffen, Interhalogenverbindungen, Stickstoffoxiden, Ozon, Maleinsäureanhydrid, Aminen, Sauerstoff, Schwefeltrioxid und Luft besteht.

15. Verfahren nach Anspruch 1, **dadurch gekennzeichnet, daß** der Unterschied zwischen dem Druck, dem die Polymerschmelze unterliegt, und dem Druck außerhalb besagter Zerstäubungsdüse größer als 0,34 bar Überdruck (5 psig) ist.

16. Expandierbares Polymerprodukt, hergestellt nach einem der Verfahren 1 bis 15.

## Revendications

1. Procédé pour la production de particules thermo-plastiques expansibles qui comprend les étapes consistant :
a) à fournir un mélange à l'état fondu qui comprend un polymère thermoplastique et un agent d'expansion ;
b) à former des particules à partir du polymère thermoplastique en fournissant un courant d'un gaz d'atomi-sation frappant sur ledit mélange à l'état fondu ;
c) à refroidir les particules expansibles au-dessous de leur point de fusion ; et à recueillir les particules.

2. Procédé selon la revendication 1, dans lequel ledit polymère thermoplastique comprend au moins un poly-mère choisi dans le groupe formé : du polystyrène, du polyéthylène et du polypropylène.

3. Procédé selon la revendication 1, dans lequel ledit agent d'expansion est choisi dans le groupe formé : des hydrocarbures, des chlorohydrocarbures, des chloro-fluorohydrocarbures, du dioxyde de carbone, de l'azote et de l'air.

4. Procédé selon la revendication 3, dans lequel ledit agent d'expansion est l'azodicarbonamide.

5. Procédé selon la revendication 3, dans lequel ledit agent d'expansion est choisi dans le groupe formé : du pentane et de l'isobutane.

6. Procédé selon la revendication 1, dans lequel ledit refroidissement est effectué en raison de l'expansion du gaz d'atomisation.

7. Procédé selon la revendication 6, dans lequel ladite expansion est essentiellement adiabatique.

8. Procédé selon la revendication 1, dans lequel le diamètre des particules recueillies est compris entre 0,3 et 1,5 mm.

9. Procédé selon la revendication 1, dans lequel la température dudit mélange à l'état fondu est comprise entre 40°C et 300°C.

10. Procédé selon la revendication 1, dans lequel le mélange à l'état fondu est soumis à une pression qui est supérieure à la pression atmosphérique.

11. Procédé selon la revendication 1, dans lequel la concentration dudit agent d'expansion dans ladite masse fondue de polymère est comprise entre 0,5 % et 7,0 % en poids du poids total de masse fondue de polymère.

12. Procédé selon la revendication 1, dans lequel ledit agent d'expansion est choisi dans le groupe formé : des gaz nobles, de l'azote, de l'oxygène, de l'air, et du dioxyde de carbone.

13. Procédé selon la revendication 1, dans lequel ledit gaz d'atomisation inclut une espèce réactive qui est capable de fonctionnaliser le polymère.

14. Procédé selon la revendication 13, dans lequel ladite espèce réactive est choisie dans le groupe formé : des halogènes, des halogénures d'hydrogène, des composés interhalogénés, des oxydes d'azote, de l'ozone, de l'anhydride maléique, des amines, de l'oxygène, du trioxyde de soufre, et de l'air.

15. Procédé selon la revendication 1, dans lequel la différence entre la pression éprouvée par la masse fondue de polymère et la pression à l'extérieur de ladite buse d'atomisation est supérieure à 0,34 bar manométrique (5 psig).

16. Produit de polymère expansible produit selon l'un quelconque des procédés 1 à 15.
